Europäisches Patentamt

European Patent Office

Office européen des brevets

(11) Veröffentlichungsnummer: **0 396 810**
**A1**

## EUROPÄISCHE PATENTANMELDUNG

(21) Anmeldenummer: **89108589.6**

(22) Anmeldetag: **12.05.89**

(51) Int. Cl.5: **A23B 7/00, A23D 9/00, A23L 1/221**

(43) Veröffentlichungstag der Anmeldung:
**14.11.90 Patentblatt 90/46**

(84) Benannte Vertragsstaaten:
**AT BE CH DE ES FR GB GR IT LI LU NL SE**

(71) Anmelder: **Seffert, Ute**
**Saarlandstrasse 22**
**D-6530 Bingen/Rhein(DE)**

(72) Erfinder: **Seffert, Ute**
**Saarlandstrasse 22**
**D-6530 Bingen/Rhein(DE)**

(74) Vertreter: **Lorenzen, Knud, Dipl.-Chem. Dr.**
**Morassistrasse 8**
**D-8000 München 5(DE)**

(54) **Verfahren zur Herstellung von aus Knoblauch bestehenden oder Knoblauch enthaltenden Gewürzkonserven und nach dem Verfahren hergestellte Gewürzkonserven.**

(57) Die Erfindung betrifft ein Verfahren zur Herstellung von aus Knoblauch bestehenden oder Knoblauch enthaltenden Gewürzkonserven und nach dem Verfahren hergestellte Gewürzkonserven.

Nach dem Verfahren werden ganze oder zerkleinerte Knoblauchzehen mit heißem Pflanzenöl übergossen, die Mischung abkühlen gelassen und in Gefäßen luftdicht verschlossen. Gegebenenfalls können neben dem Knoblauch noch weitere Gewürze wie Cayenne - Pfeffer, Kräuter der Provence oder Chili zugesetzt werden.

Die auf diese Weise hergestellten Gewürzkonserven, zu denen auch Knoblauchöl gehört, sind für längere Zeiten lagerfähig, ohne daß ein Faulen oder Keimen des eingesetzten Knoblauchs auftritt,und der Knoblauchgeschmack wird ohne Beeinträchtigung durch Fremdgeschmäcke voll aufrecht erhalten.

## Verfahren zur Herstellung von aus Knoblauch bestehenden oder Knoblauch enthaltenden Gewürzkonserven und nach dem Verfahren hergestellte Gewürzkonserven

Die Erfindung betrifft ein Verfahren zur Herstellung von aus Knoblauch bestehenden oder Knoblauch enthaltenden Gewürzkonserven sowie nach dem Verfahren hergestellte Gewürzkonserven.

Es ist bereits bekannt, ganze Knoblauchzehen als Gewürzkonserven herzustellen. Als Konservierungsflüssigkeit wird hierbei im wesentlichen Essig verwendet, dem übliche Zusatzstoffe wie Antioxidationsmittel, z. b. Benzoesäure oder Sorbinsäure, zugesetzt sein können. Eine Konservierung von ganzen Knoblauchzehen in Öl hat sich nicht als erfolgreich herausgestellt, da die Knoblauchzehen nach relativ kurzer Zeit schwarz wurden, d. h. faulten, oder auskeimten.

Aufgabe der vorliegenden Erfindung ist ein neues Verfahren zur Herstellung von aus Knoblauch bestehenden oder Knoblauch enthaltenden Gewürzkonserven, in welchen der Geschmack von frischem Knoblauch möglichst vollständig erhalten bleibt und die dennoch längere Zeit ohne Geschmacksverlust oder Geschmacksbeeinträchtigung aufbewahrt werden können und bei denen keine andersartigen Geschmackskomponenten, wie Essiggschmack, zu der Knoblauch-Geschmackskomponente hinzukommen.

Zur Lösung dieser Aufgabe dient das erfindungsgemäße Verfahren, das dadurch gekennzeichnet ist, daß man gepellte, ganze oder zerkleinerte Knoblauchzehen mit heißem Pflanzenöl, das gegebenenfalls weitere Gewürze enthält, übergießt, anschließend abkühlen läßt und die erkaltete Mischung aus Knoblauch, eventuell weiteren Gewürzen und Planzenöl in Gefäßen luftdicht verschließt.

Vorteilhafterweise wird bei Verwendung von ganzen Knoblauchzehen ein heißes Pflanzenöl zum Übergießen verwendet, das zuvor auf 100° C bis 130° C, bevorzugt auf 115° C bis 125° C, erhitzt wurde. Hierdurch wird einerseits vermieden, daß die Knoblauchzehen schwarz werden oder zu keimen beginnen, andererseits, daß die Knoblauchzehen durch das heiße Öl angeröstet werden.

Bei Verwendung von zerkleinerten Knoblauchzehen wird vorteilhafterweise ein heißes Pflanzenöl zum Übergießen verwendet, das zuvor auf 85° C bis 115° C, bevorzugt auf 90° C bis 100° C, erhitzt wurde, und zwar aus den gleichen Gründen, wie sie zuvor mit Bezug auf die Anwendung des Verfahrens bei ganzen Knoblauchzehen angeführt wurden.

Gemäß einer bevorzugten Ausführungsform kann man dem Pflanzenöl vor dem Übergießen weitere Gewürze, z. B. Kräuter der Provence, Cayenne-Pfeffer oder Chili, zusetzen, wobei diese weiteren Gewürze sowohl zusammen mit dem Pflanzenöl erhitzt als auch dem bereits auf die gewünschte Temperatur erhitzten Pflanzenöl kurz vor dem Übergießen zugesetzt werden können. Cayenne-Pfeffer und Chili werden vorteilhafterweise in zerkleinertem Zustand verwendet.

Nach dem erfindungsgemäßen Verfahren werden Knoblauch-Gewürzkonserven erhalten, welche den Knoblauchgeschmack von frischem Knoblauch weitgehend oder vollständig beibehalten haben und diesen auf die damit gewürzten Speisen übertragen, ohne daß Fremdgeschmack, z. B. von Essig, übertragen wird. Unter dem hier verwendeten Ausdruck 'Gewürzkonserven' ist auch ein sogenanntes Knoblauchöl zu verstehen, wie es anhand eines der Beispiele näher beschrieben ist.

Zur Herstellung der Knoblauch-Gewürzkonserven werden zunächst Knoblauchzwiebeln in einzelne Zehen aufgeteilt, wobei darauf geachtet werden soll, daß keine Verletzungen der Einzelzehen auftreten. Anschließend werden die Einzelzehen abgepellt, was vorteilhafterweise durch Übergießen mit heißem Wasser oder kurzes Blanchieren und anschließendes Abpellen der äußeren Haut erfolgt. Dann werden die gegebenenfalls noch feuchten Einzelzehen an der Luft trocknen gelassen. Eine Zerkleinerung der Einzelzehen kann sowohl mit einem Messer als auch auf einer Reibe erfolgen.

Anschließend wird Pflanzenöl, z. B. Olivenöl, Maiskeimöl, Erdnußöl, Sonnenblumenöl oder ein beliebiges anderes Öl, auf die erforderliche Temperatur - je nach Konservierung von ganzen Knoblauchzehen oder von zerkleinerten Knoblauchzehen - erhitzt und über den in geeigneten Gefäßen, vorteilhafterwiese Glasgefäßen, vorher eingelegten Knoblauch gegossen, bis der Flüssigkeitsspiegel den Knoblauch überdeckt. Gegebenenfalls werden dem Pflanzenöl vorher noch die weiteren Gewürze zugesetzt.

Der mit Pflanzenöl übergossene Knoblauch wird dann in den Gefäßen abkühlen gelassen, z. B. durch Stehenlassen über Nacht, und dann werden die Gefäße luftdicht verschlossen, z. B. mit den üblichen Bajonett-Deckeln oder Schraubverschlüssen oder Plastik-Kappen.

Die nach dem erfindungsgemäßen Verfahren hergestellten Gewürzkonserven einschließlich des sogenannten Knoblauchöls sind längere Zeit lagerbar, z. B. 1/2 Jahr, und ganze eingelegte Knoblauchzehen behalten auch für diese Zeit ihre Frische und Farbe sowie ihren vollen Geschmack bei.

Den Gewürzkonserven können die üblichen, lebensmittelrechtlich unbedenklichen und zugelassenen Antioxidationsmittel oder Konservierungsstoffe zugesetzt werden.

Die Erfindung wird anhand der folgenden Beispiele näher erläutert:

Beispiel 1

Knoblauchzwiebeln wurden in Einzelzehen aufgeteilt und diese durch Übergießen mit heißem Wasser und manuelles Abpellen von ihrer äußeren Haut befreit. Die gepellten Einzelzehen wurden in 0,5 l Gläser eingelegt, nachdem sie über Nacht an der Luft trocknen gelassen worden waren.

Anschließend wurden 0,4 l Pflanzenöl mit 20 g Kräutern der Provence versetzt und auf 120° C erhitzt und das erhitzte Pflanzenöl über die Knoblauchzehen in dem Glas gegossen bis diese im Öl schwammen. Es wurde über Nacht erkalten gelassen und dann die Gläser mit dem zugehörigen Bajonett-Deckel verschlossen.

Die eingelegten Knoblauchzehen behielten ihren vollen Geschmack und ihre Frische und Farbe unverändert über 6 Monate bei.

Beispiel 2

Es wurden gepellte Einzelzehen nach der Arbeitsweise von Beispiel 1 vorbereitet und diese in kleine Stücke von 0,5 mm zerkleinert. 300 g wurden in ein Glasgefäß eingefüllt und mit 0,125 l Pflanzenöl, das zuvor mit 25 g zerkleinerten Cayenne-Pfefferschoten und 50 g Kräutern der Provence versetzt und auf 95° C erhitzt worden war, übergossen, bis sie bedeckt waren. Es wurde so eine dicke, mit Knoblauchstücken durchsetzte, marinadenartige Masse erhalten.

Durch das Übergießen mit dem heißen Pflanzenöl behielt die Mischung aus Öl, Knoblauchstücken, Cayenne-Pffer und Kräutern der Provence ihren Geschmack vollständig über längere Zeit bei.

Beim Gebrauch ist ein Verdünnen der Gewürzkonserve mit weiterem Öl ohne weiteres möglich.

Beispiel 3

Die Arbeitsweise von Beispiel 1 wurde wiederholt, wobei jedoch keine Zugabe von Kräutern der Provence zu dem Pflanzenöl erfolgte.

Es wurde eine haltbare Gewürzkonserve von eingelegten, ganzen Knoblauchzehen erhalten.

Beispiel 4

Es wurden 25 Knoblauchzehen nach der Arbeitsweise von Beispiel 1 vorbereitet und zerkleinert. Diese wurden in eine 1 l Glasflasche eingegeben und 1 l Pflanzenöl wurde auf 90° C zusammen mit 5 g Kräutern der Provence erhitzt. Dieses wurde über den Knoblauch in der Flasche gegossen und nach dem Abkühlen wurde die Flasche verschlossen.

Die ätherischen Öle des zerkleinerten Knoblauchs und der Kräuter der Provence gingen in das Öl über, das zum Würzen verwendet werden konnte und während mindestens 6 Monaten lagerfähig war.

Ansprüche

1. Verfahren zur Herstellung von aus Knoblauch bestehenden oder Knoblauch enthaltenden Gewürzkonserven, dadurch gekennzeichnet, daß man gepellte, ganze oder zerkleinerte Knoblauchzehen mit heißem Pflanzenöl, das gegebenenfalls weitere Gewürze enthält, übergießt, anschließend abkühlen läßt und in Gefäßen luftdicht verschließt.

2. Verfahren nach Anspruch 1, dadurch gekennzeichnet, daß man bei Verwendung von ganzen Knoblauchzehen heißes Pfanzenöl mit einer Temperatur von 100° C bis 130° C zum Übergießen verwendet.

3. Verfahren nach Anspruch 2, dadurch gekennzeichnet, daß man heißes Pflanzenöl mit einer Temperatur von 115° C bis 125° C verwendet.

4. Verfahren nach Anspruch 1, dadurch gekennzeichnet, daß man bei Verwendung von zerkleinerten Knoblauchzehen heißes Pflanzenöl mit einer Temperatur von 85° C bis 115° C zum Übergießen verwendet.

5. Verfahren nach Anspruch 4, dadurch gekennzeichnet, daß man heiße es Pflanzenöl mit einer Temperatur von 90° C bis 100° C verwendet.

6. Verfahren nach einem der vorhergehenden Ansprüche, dadurch gekennzeichnet, daß man als weitere Gewürze in dem Pflanzenöl Kräuter der Provence, Cayenne-Pfefferschoten oder Chili verwendet.

7. Gewürzkonserven, hergestellt nach dem Verfahren eines der vorhergehenden Ansprüche.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 572 836 (A.I. BAKAL)<br>* Ansprüche 1,5,8,10; Beispiel 3 *<br>--- | 1-7 | A 23 B 7/00<br>A 23 D 9/00<br>A 23 L 1/221 |
| Y | FR-A-2 541 866 (J. CAMPGUILHEM)<br>* Anspruch 1 *<br>--- | 1-7 | |
| A | FR-A-1 347 023 (P. NATAF)<br>* Beispiel 1 *<br>--- | 1 | |
| A | DE-A-2 125 931 (MEDIKEMIA SZÖVETKEZET)<br>* Ansprüche 1-3 *<br>--- | 1 | |
| A | EP-A-0 021 313 (CPC)<br>* Anspruch 1 *<br>----- | 1 | |

RECHERCHIERTE
SACHGEBIETE (Int. Cl.5)

A 23 B
A 23 D
A 23 L

Der vorliegende Recherchenbericht wurde für alle Patentansprüche erstellt

| Recherchenort | Abschlußdatum der Recherche | Prüfer |
|---|---|---|
| DEN HAAG | 20-12-1989 | VAN MOER A.M.J. |

EPO FORM 1503 03.82 (P0403)